# EUROPEAN PATENT SPECIFICATION

(11) **EP 3 877 474 B1**
(45) Date of publication and mention of the grant of the patent: **11.03.2026**
(21) Application number: 19790219.0
(22) Date of filing: 24.10.2019
(51) Int. Cl.: C09D 11/322, C09D 11/40, C09D 11/54, D06P 1/52, D06P 1/54, D06P 5/20, D06P 5/30, C09D 11/10, C08K 5/00, C08K 9/10

(54) **INKJET INK SET COMPRISING A CATIONIC AND AN ANIONIC INK**
TINTENSTRAHLTINTENSATZ MIT EINER KATIONISCHEN UND EINER ANIONISCHEN TINTE
ENSEMBLE D'ENCRES POUR IMPRESSION JET D'ENCRE COMPRENANT UNE ENCRE CATIONIQUE ET ANIONIQUE

(30) Priority: 09.11.2018 EP 18205348
(43) Date of publication of application: 15.09.2021
(73) Proprietor: AGFA NV, 2640 Mortsel (BE)
(72) Inventor: LOCCUFIER, Johan, 2640 Mortsel (BE)
(74) Representative: Lingier, Stefaan Frans L.
(86) International application number: PCT/EP2019/079078
(87) International publication number: WO 2020/094413

(56) References cited:
- WO-A1-2018/137993
- WO-A1-2018/138069

## Description

### Technical Field

The present invention relates to an aqueous ink set for digital textile printing and a printing method therefor.

### Background Art

In textile printing, there is a clear evolution from classical textile printing technologies such as screen printing towards digital printing. Additionally, there is a tendency to go from dye based inks to pigment based inks. Pigment based inks hold the promise of being compatible with different fibres, both natural fibres such as cellulose base fibres e.g. in cotton and synthetic fibres such as polyester and polyamide. Pigment based inks also allow to print on mixed fibre fabrics. To bind the pigments to the different types of fibres preferably reactive binder technology has to be introduced into the inks. Several approaches have been disclosed in the patent literature.

WO2003/029362 discloses an ink composition comprising at least one pigment, at least one dispersed resin selected from the group consisting of acrylic acrylonitrile resins, styrene-acrylic resins, acrylic-butadiene resins, butadiene acrylonitrile resins and polyurethane resins, at least one cross linker and a liquid medium. Melamine resins are disclosed particularly preferred resins.

WO2009/137753 discloses an ink composition comprising a colorant, a specific cross linked polyurethane designed for hydrolytical stability and a post curing agent selected from the group consisting of amide and amine formaldehyde resins, phenolic resins, urea resins and blocked isocyanates, with melamine formaldehyde resins as preferred embodiment.

US5853861 discloses an ink textile combination, where the ink comprises at least on pigment and a polymer having a functional group selected from an acid, a base, an epoxy and a hydroxyl group and where the textile comprises at least one specific functional group selected from the group consisting of a hydroxyl, an amine, an amide and a carbonyl moiety and a cross linker selected from specific organometallic compounds and isocyanates.

US2009/0226678A discloses an ink set comprising a fixing liquid and an ink comprising a pigment dispersion. The fixing agent comprises specific polymer particles with a Tg below -10°C and a reactant, preferably a blocked isocyanate dispersion.

EP29333374A discloses the use of encapsulated reactive chemistry to manufacture printed textiles. Blocked isocyanates are disclosed as preferred reactive chemistry.

Most of the textile fabrics have a porous nature. When printing with pigment inks onto different fabrics, pigments penetrate deeper into the fabric resulting in a loss of gamut. Similar problems are known when printing on paper based substrates. To solve these problems, several approaches have been disclosed in the patent literature, where optimizers, often called reaction liquids are applied first onto the substrate, followed by jetting aqueous pigment inks, resulting in an optimized image quality: US 2006093761, US 2009079790, US 2010080911.

In WO2018/137993A cationic stabilised capsules including reactive binding chemistry was included in the reaction liquid of an inkjet recording method for textile printing. The presence of the cationic charges onto the capsules has lead to a higher colour gamut of the printed images. WO 2018/138069A discloses pre-treatment liquids containing capsules wherein the shell comprises cationic dispersing groups obtainable by reacting a surfactant comprising an amine and quaternary ammonium group with a compound, leading to a higher colour gamut of the printed images.

However, there is still a need for further improving the colour gamut of printed images on textile, especially on textile fabrics which are not pre-treated by e.g. the supplier. The absence of a pre-treatment onto the fibres of the fabric leads to a more pronounced diffusion of the pigment into the

fabric, resulting in a poor colour density or colour gamut. Increasing the colour gamut by increasing the pigment load in the aqueous inkjet ink is, however limited due to the maximal solid content an aqueous inkjet ink can have before the jetting reliability or storage stability is wrongly affected. Adding extra colorants to the pre-treatment liquid is not possible due to interaction between the colorant and the fixing or coagulating agent present in the pre-treatment liquid. And even if the colorant content in the aqueous ink can be increased, it is observed that the crock fastness of the printed image on textile is then severely decreased.

### Summary of invention

It is the objective of the present invention to provide a solution to the above stated problem of increasing the colour gamut of printed images on textile without affecting the crock fastness in a negative way. The object has been achieved by providing a set of inks, comprising a first aqueous ink and a second aqueous ink as defined in claim 1.

According to another aspect, the present invention includes an inkjet recording method on a textile fabric with the set of inks as defined in claim 1. This method is defined in claim 12.

Other features, elements, steps, characteristics and advantages of the present invention will become more apparent from the following detailed description of preferred embodiments of the present invention. Specific embodiments of the invention are also defined in the dependent claims.

### Description of embodiments

### A. Ink set for inkjet recording

### A.1. First aqueous ink

The first aqueous ink of the ink set according to the invention comprises water, a colorant stabilised by cationic dispersing groups and nanocapsules stabilized by cationic dispersing groups and having a core comprising one or more chemical reactants in the core which are capable of forming a reaction product upon application of heat and/or light and a polymeric shell surrounding the core. Preferably the one or more chemical reactants is a thermally reactive cross-linker. Preferably the stabilizing cationic dispersing groups are covalently bonded to the polymeric shell, and more preferably the core comprises a thermally reactive cross-linker.

### A.1.1. Colorant stabilised by cationic dispersing groups

The term 'colorant' as used herein may refer to just a pigment or disperse dye, or it may refer to a colorant in combination with a dispersant comprising a cationic group, the dispersant being a polymer or a surfactant. The colorant may be any colour, but preferably the colorant is cyan, magenta, yellow or black, most preferably black.

Self-dispersed pigments stabilised by cationic dispersing groups refers to pigments that have been chemically modified with a cationic charge.

The ink composition may employ self-dispersable pigments including at least one modified pigment having attached at least one organic group. In one embodiment, the organic group comprises a cationic group, an ionizable group, or a mixture of an ionic group and an ionizable group. An ionizable group is one that is capable of forming a cationic group in the ink medium of use.

Cationic groups may be generated from protonated amines that are attached to the pigment. Preferably, an organic group having an amine substituent has a pK_{b} of less than 5. Cationic groups may be quaternary ammonium groups (--NR'₃⁺) and quaternary phosphonium groups (-PR'₃⁺), where R' represents hydrogen or an organic group such as a substituted or unsubstituted aryl and/or alkyl group.

Quaternized cyclic ammonium ions, and quatemized aromatic ammonium ions, can also be used as the cationic group. Thus, N-substituted pyridinium species, such as N-methyl-pyridyl, can be used in this regard.

Preferably, the cationic organic group is -NR'₃ ⁺ wherein R' is an alkyl group or an aryl group, more preferably an ethyl group. Another preferred group is -C₅H₄N--R'⁺, wherein R' is an alkyl group such as a methyl group or a benzyl group.

The pigment can be dispersed by a polymeric dispersant or a surfactant including a cationic group. Preferably at least some of these monomer units of the polymeric dispersant comprises a cationic group or an ionisable group leading to a positive charge. Additional examples thereof may include those obtained by polymerization of a vinyl monomer and having a cationic nature in at least a part of the resulting polymer. Examples of a cationic monomer for forming the cationic moiety include salts of such tertiary amine monomers as described below, and quaternized product thereof. Namely, there are mentioned: N,N-triethyl styrene, N,N- dimethylaminoethyl methacrylate, N,N -dimethylaminoethyl acrylate, N,N - dimethylaminopropyl methacrylate, N,N - dimethylaminopropyl acrylate, N,N-dimethylacrylamide, N,N-dimethylmethacrylamide, N,Ndimethylaminoethylacrylamide, N,N-dimethylaminoethylmethacrylamide, N,N-dimethylaminopropylacrylamide, and N,N-dimethylaminopropyl-methacrylamide.

Other suitable polymers are made via radical polymerisation using e.g. vinyl monomers such as: vinylbenzyl amine, vinyl phenylamine, 2-vinylpyridine, 4-vinylpyridine, p-aminostyrene, vinylpiperidine, vinyl imidazole. Preferably a copolymer of styrene and trialkyl-[(4-vinylphenyl)methyl]ammonium chloride, trialkyl-[(3-vinylphenyl)methyl]ammonium chloride or mixtures thereof is used as polymeric dispersant, more preferably the alkyl being a C₁ to C₄, most preferred the alkyl group being an ethyl group. These copolymers of styrene are particularly useful for dispersing black pigments because of the relative high aromatic character of the polymeric dispersant matching the hydrophobic character of the pigment surface.

The pigments may be chosen from a wide range of conventional coloured pigments. Preferably, the pigment is a white pigment, a black pigment, a blue pigment, a brown pigment, a cyan pigment, a green pigment, a violet pigment, a magenta pigment, a red pigment, or a yellow pigment, or shades or combinations thereof.

Particularly suitable pigments within the scope of the present invention include carbon products such as graphite, carbon black, vitreous carbon, carbon fibres, activated charcoal, and activated carbon. The carbon may be of the crystalline or amorphous type. Finely divided forms of the above are preferred; also, it is possible to utilize mixtures of different carbons.

Particularly useful for printing on dark textile is a first aqueous ink containing a white pigment. The preferred pigment for a first white aqueous ink is titanium dioxide. Titanium dioxide (TIO₂) pigment useful in the present invention may be in the rutile or anastase crystalline form. Processes for making TiO₂ are described in greater detail in "The Pigment Handbook", Vol. I, 2nd Ed., John Wiley & Sons, NY (1988), the relevant disclosure of which is incorporated by reference herein for all purposes as if fully set forth.

The titanium dioxide particles can have a wide variety of average particle sizes of about 1 micron or less, depending on the desired end use application of the first aqueous ink. For applications demanding high hiding or decorative printing applications, the titanium dioxide particles preferably have an average size of less than about 1 µm. Preferably, the particles have an average size of from about 50 to about 950 nm, more preferably from about 75 to about 750 nm, and still more preferably from about 100 to about 500 nm.

For applications demanding white colour with some degree of transparency, the pigment preference is "nano" titanium dioxide. "Nano" titanium dioxide particles typically have an average size ranging from about 10 to about 200 nm, preferably from about 20 to about 150 nm, and more preferably from about 35 to about 75 nm. An ink comprising nano titanium dioxide can provide improved chroma and transparency, while still retaining good resistance to light fade and appropriate hue angle. A commercially available example of an uncoated nano grade of titanium oxide is P-25, available from Degussa (Parsippany N.J.).

In addition, unique advantages may be realized with multiple particle sizes, such as opaqueness and UV protection. These multiple sizes can be achieved by adding both a pigmentary and a nano grade of TIO₂.

The titanium dioxide is preferably incorporated into the first aqueous ink via a slurry concentrate composition. The amount of titanium dioxide present in the slurry composition is preferably from about 15 wt. % to about 80 wt. %, based on the total slurry weight.

The titanium dioxide pigment may also bear one or more metal oxide surface coatings. These coatings may be applied using techniques known by those skilled in the art. Examples of metal oxide coatings include silica, alumina, aluminasilica, boria and zirconia, among others. These coatings can provide improved properties including reducing the photoreactivity of the titanium dioxide. Metal oxide coatings of alumina, aluminasilica, boria and zirconia result in a positive charged surface of the TiO₂ pigments and hence are particularly useful in combination with the cationic stabilised capsules of the invention because no additional surface treatment of the pigment is required.

Commercial examples of such coated titanium dioxides include R700 (alumina-coated, available from E.I. DuPont deNemours, Wilmington Del.), RDI-S (alumina-coated, available from Kemira Industrial Chemicals, Helsinki, Finland), R706 (available from DuPont, Wilmington Del.) and W-6042 (a silica alumina treated nano grade titanium dioxide from Tayco Corporation, Osaka Japan).

Pigment particles in inkjet inks should be sufficiently small to permit free flow of the ink through the inkjet-printing device, especially at the ejecting nozzles. It is also desirable to use small particles for maximum colour strength and to slow down sedimentation.

The average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer Bl90plus based upon the principle of dynamic light scattering. The ink is diluted with demi water to a pigment concentration of 0.002 wt%. The measurement settings of the BI90plus are: 5 runs at 23°C, angle of 90 °, wavelength of 635 nm and graphics = correction function.

The pigments are preferably present in the range of 0.01 to 15 %, more preferably in the range of 0.05 to 10 % by weight and most preferably in the range of 0.1 to 5 % by weight, each based on the total weight of the inkjet ink. For white inkjet inks, the white pigment is preferably present in an amount of 3% to 40% by weight of the inkjet ink, and more preferably 5% to 35%. An amount of less than 3% by weight cannot achieve sufficient covering power.

### A.1.2. Nanocapsules stabilised by cationic dispersing groups

### A.1.2.1. Method of preparation

The preparation method of the capsules in the inks of the invention, hereafter called due to their small size, nanocapsules, is preferably via a polymerization method which allows the highest control in designing the capsules. More preferably interfacial polymerization is used to prepare the capsules used in the invention. This technique is well-known and has recently been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

Interfacial polymerisation is a particularly preferred technology for the preparation of capsules according to the present invention. In interfacial polymerization, such as interfacial polycondensation, two reactants meet at the interface of the emulsion droplets and react rapidly.

In general, interfacial polymerisation requires the dispersion of an oleophilic phase in an aqueous continuous phase or vice versa. Each of the phases contains at least one dissolved monomer (a first shell component in e.g. the oleophilic phase) that is capable of reacting with another monomer (a second shell component) dissolved in the other phase, e.g. the aqueous phase. Upon polymerisation, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerisation.

In a preferred embodiment each of the phases contains at least one dissolved monomer (a first shell component in e.g. the oleophilic phase) that is capable of reacting with another monomer (a second shell component) and a crosslinking agent dissolved in the other phase, e.g. the aqueous phase. Upon polymerisation, a polymer is formed that is insoluble in both the aqueous and the oleophilic phase and wherein the polymer is also cross-linked. As a result, the formed polymer has not only the tendency to precipitate at the interface of the oleophilic and aqueous phase, hereby forming a shell around the dispersed phase, but also to lead to a polymeric shell which is substantially less flexible than when no additional crosslinking agent is used. This leads to a first aqueous ink which has an improved storage stability.

The crosslinking agent, preferably added to the aqueous continuous phase is a compound having at least three nucleophilic groups which are capable of reacting with the first shell component such as, an amine group, a hydroxyl group, a thiol group, a hydrazide group or a sulfonylhydrazide group. Preferable polyamines are used together with a di- or oligoisocyanate as first shell component, more preferably an alkylene pentamine with a di- or oligocyanate as first shell component.

The capsules according to the present invention are preferably prepared from an oleophilic dispersion in an aqueous continuous phase. The obtained dispersion of capsules can be stabilized in the aqueous medium by means of cationic dispersants or can be stabilized by cationic groups incorporated in the polymeric shell. This leads to so-called self-dispersible capsules.

### A.1.2.2. Polymeric shell

Typical polymeric shells, formed by interfacial polymerisation are selected from the group consisting of polyamides, typically prepared from di- or poly-acid chlorides as first shell component and di- or oligoamines as second shell component, polyurea, typically prepared from di- or oligoisocyanates as first shell component and di- or oligoamines as second shell component, polyurethanes, typically prepared from di- or oligoisocyanates as first shell component and di- or oligoalcohols as second shell component, polysulfonamides, typically prepared from di- or oligosulfochlorides as first shell component and di- or oligoamines as second shell component, polyesters, typically prepared from di- or oligo-acid chlorides as first shell component and di- or oligoalcohols as second shell component and polycarbonates, typically prepared from di- or oligo-chloroformates as first shell component and di- or oligoalcohols as second shell component. The shell can be composed of combinations of these polymers.

In a further embodiment, polymers, such as gelatine, chitosan, albumin and polyethylene imine can be used as second shell components in combination with a di- or oligio-isocyanate, a di- or oligo acid chloride, a di- or oligo-chloroformate and an epoxy resin as first shell component.

In a particularly preferred embodiment, the shell is composed of a polyurethane, a polyurea or a combination thereof. In a further preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent.

In a further preferred embodiment, said nanocaps is a selfdispersing cationic nanocaps. A selfdispersing nanocap is defined as a nanocapsule where the cationic dispersing groups responsible for colloid stability are covalently coupled to the shell.

The cationic dispersing groups which make part of the shell of the nanocapsule of the invention are preferably selected from protonated amines, protonated nitrogen containing heteroarmoatic compounds, quaternized tertiary amines, N-quaternized heteroaromatic compounds, sulfoniums and phosphoniums, quaternized tertiary amines and N-quaternized heteroaromatic compounds being more preferred. In a further preferred embodiment, the cationic dispersing group is a quaternary ammonium group, a tetraalkyl ammonium group being particularly preferred. In a more preferred embodiment the quaternary ammonium group is covalently coupled to the shell of the nanocapsule. In a particularly preferred embodiment the cationic dispersing group is covalently coupled to the shell of the nanocapsules according to the present invention by reaction of a surfactant comprising at least one primary or secondary amine group and at least one quaternary ammonium group with a compound selected from the group of di- or poly-acid chlorides, di- or oligoisocyanates, di- or oligosulfochlorides, di- or oligo-chloroformates and an isocyanate monomer of the shell. More preferably the surfactant comprising at least one primary or secondary amine group and at least one quaternary ammonium group reacts with an isocyanate monomer of the shell. The surfactant is characterised in that the hydrophilic group comprises the at least one primary or secondary amine group and the at least one quaternary ammonium group. The hydrophobic group of the surfactant may be any hydrophobic group, but is preferably a substituted or unsubstituted alkyl group, a substituted or unsubstituted alkenyl group or a substituted or unsubstituted alkynyl group, all having at least eight carbon atoms. The advantage of using a surfactant to obtain a shell comprising cationic dispersing groups, is that the emulsifying function of the surfactant can stabilize the oleophilic phase in the continuous aqueous phase during the preparation of the capsule. (see 3^{rd} paragraph of § A.1.2.1.)

In an even more preferred embodiment said surfactant is a surfactant according to General Formula I 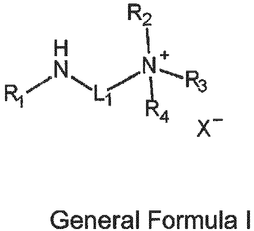 wherein
R₁ is selected from the group consisting of a substituted or unsubstituted alkyl group, a substituted or unsubstituted alkenyl group and a substituted or unsubstituted alkynyl group with the proviso that R₁ comprises at least eight carbon atoms;
R₂, R₃ and R₄ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubsituted alkaryl group and a substituted or unsubstituted (hetero)aryl group
L₁ represents a divalent linking group comprising no more than eight carbon atoms;
X represents a counterion to compensate the positive charge of the ammonium group.

Surfactants according to General Formula II are particularly preferred. 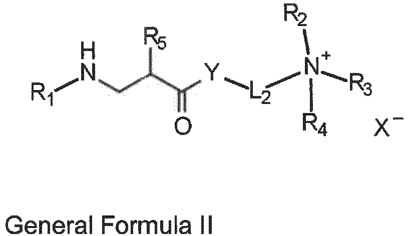 wherein
R₁, R₂, R₃, R₄ an X are defined as in general formula I
R₅ represents a hydrogen or a methyl group
Y is selected from the group consisting of an oxygen atom and NR₆
R₆ is selected from the group consisting of a hydrogen and a substituted or unsubstituted alkyl group
L₂ represents a substituted or unsubstituted alkylene group.
In a more preferred embodiment, R₁ comprises at least ten carbon atoms and most preferably at least twelve carbon atoms. In a further preferred embodiment R₂, R₃ and R₄ independently represent a lower alkyl group, a methyl and an ethyl group being particularly preferred. In another preferred embodiment Y represents NH.

Specific examples of surfactants according to General Formula I and General Formula II are given in Table 1 without being limited thereto.

**Table 1**

| | |
|---|---|
| 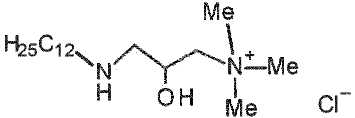 | Surf-1 |
| 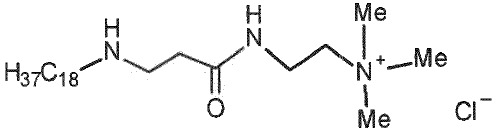 | Surf-2 |
| 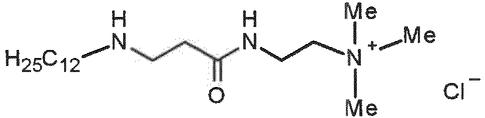 | Surf-3 |
| 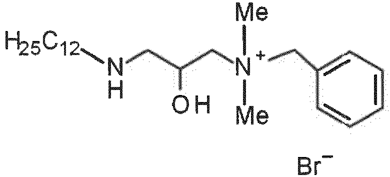 | Surf-4 |
| 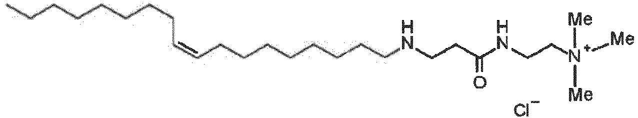 | Surf-5 |
| | Surf-6 |
| 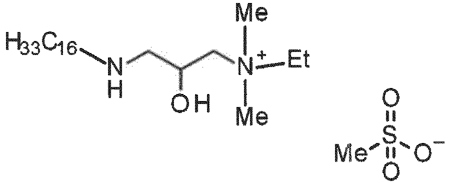 | |
| 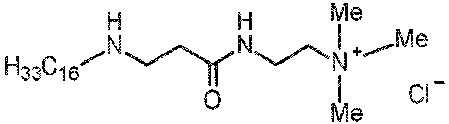 | Surf-7 |
| 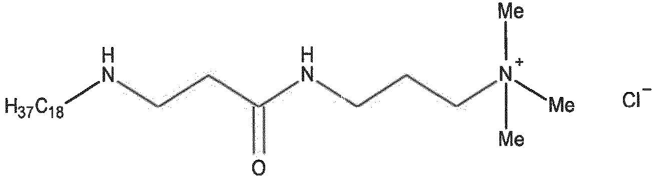 | Surf-8 |

The capsules of the invention have an average particle size of no more than 4 µm as determined by dynamic laser diffraction. The nozzle diameter of inkjet print heads is usually 20 to 35 µm. Reliable inkjet printing is possible if the average particle size of the capsules is five times smaller than the nozzle diameter. An average particle size of no more than 4 µm allows jetting by print heads having the smallest nozzle diameter of 20 µm. In a more preferred embodiment, the average particle size of the capsules is ten times smaller than the nozzle diameter. Hence preferably, the average particle size is from 0.05 to 2 µm, more preferably from 0.10 to 1 µm. When the average particle size of the capsule is smaller than 2 µm, excellent resolution and dispersion stability with time are obtained.

In a further embodiment, the aqueous medium of the dispersion of the present invention may further comprise a catalyst to activate said thermally reactive chemistry. The catalyst is preferably selected from the group consisting of a Brönsted acid, a Lewis acid and thermal acid generator. Said catalyst can be present in the aqueous continuous phase, in the core of the capsule or in a separate dispersed phase.

### A.1.2.3. Core of the capsule

The one or more chemical reactants in the core and capable of forming a reaction product upon application of heat and/or light are preferably thermal crosslinkers, more preferably blocked isocyanates.

The synthesis of blocked isocyanates is well-known to the skilled person and has been reviewed by Wicks D.A. and Wicks Z.W. Jr. (Progress in Organic Coatings, 36, 148-172 (1999)) and Delebecq et al. (Chem; Rev., 113, 80-118 (2013)). Classic blocked isocyanates are defined as chemical components that are capable of forming isocyanates from a precursor upon thermal treatment. In general, the reaction can be summarized as given in scheme 1 below. 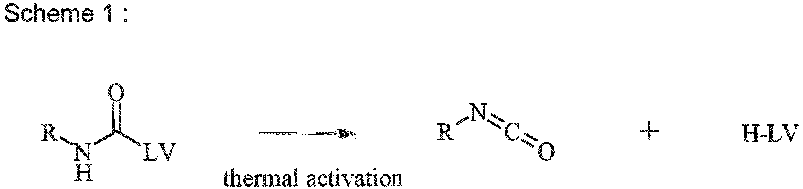 LV represents a leaving group

The activation temperature, also called deblocking temperature, is dependent on the leaving group and is selected dependent on the application. Suitable isocyanate precursors are given below having a variable deblocking temperature between 100°C and 180°C.

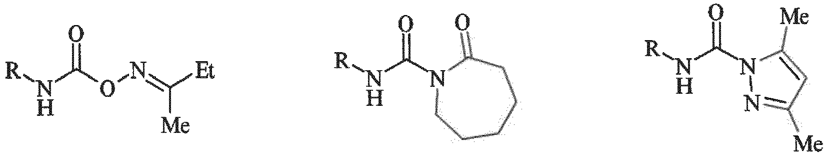

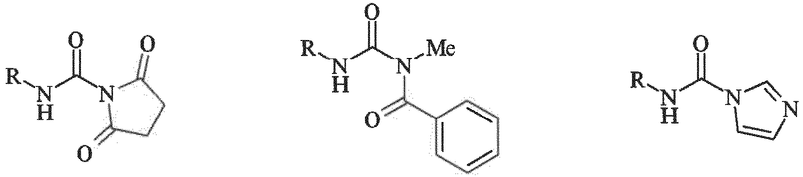

Active methylene compounds as blocking agents are widely used as alternatives for classic blocked isocyanates, operating via an alternative reaction pathway, not yielding an intermediate isocyanate but crosslinking the system via ester formation as disclosed in Progress in Organic Coatings, 36, 148-172 (1999), paragraph 3.8. Suitable examples of active methylene group blocked isocyanates are given below:

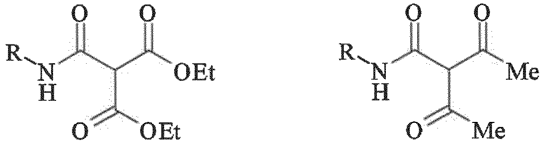

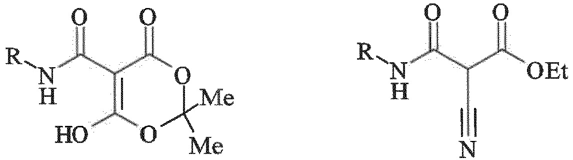

In a preferred embodiment, the blocked isocyanate can be an oligomeric blocked isocyanate having a number average molecular weight of 5000 or less, more preferably less than 4000 and most preferably less than 3000.

In a preferred embodiment, said blocked isocyanate has a structure according to General Structure III. 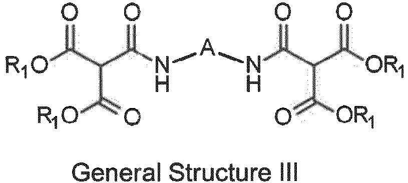 wherein
R₁ is selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group.

A represents a difunctional oligomeric group selected from the group consisting of an oligo-ether, an oligo-ester, an oligo-carbonate, a butadiene oligomer, a hydrogenated butadiene oligomer, an isoprene oligomer, a silicone oligomer and combinations thereof.

In an even more preferred embodiment, R₁ represents an alkyl group, a C1 to C4 alkyl group being more preferred, an ethyl group being the most preferred.

In a preferred embodiment said poly-ether oligomers preferably contain 3 to 50 repeating units, more preferably 5 to 40 repeating units and most preferably 6 to 30 repeating units. Said poly-ester based oligomer preferably contains 2 to 20 repeating units, more preferably 3 to 15 repeating units and most preferably 4 to 10 repeating units. Said polysiloxane based oligomer preferably contains 3 to 40 repeating units, more preferably 5 to 30 repeating units and most preferably 6 to 20 repeating units. Said polycarbonate based oligomer preferably contains 3 to 30 repeating units, more preferably 4 to 20 repeating units and most preferably 5 to 15 repeating units. Said polybutadiene, hydrogenated polybutadiene and polyisoprene based oligomers preferably contain 3 to 50 repeating units, 5 to 40 repeating units and most preferably 6 to 30 repeating units. Oligomers containing different oligomeric repeating units preferably contain 60 repeating units or less, more preferably 50 repeating units or less and most preferably 30 repeating units or less.

Typical examples of oligomeric blocked isocyanates according to the present invention are given in Table 1 of the unpublished patent application WO2018/138054.

In a more preferred embodiment of the invention a silicone containing compound is present in the core of the capsule together with a blocked isocyanate, more preferably together with an oligomeric blocked isocyanate. Most preferably, the silicone containing compound is a Poly[dimethylsiloxane-co-(2-(3,4-epoxycyclohexyl)ethyl)methylsiloxane] or Poly(dimethylsiloxane), diglycidyl ether terminated and is present in the core together with an oligo-ether blocked isocyanate.

In a preferred embodiment of the invention, the silicone containing compound is coupled with a blocked isocyanate. By coupling the silicone containing compound with a blocked isocyanate before adding the isocyanate (first shell component), the silicone containing compound can not react with the isocyanate or other reactive first shell component.

In a more preferred embodiment of the invention, the silicone containing compound is a compound further containing an epoxy group. Silicone containing compounds further containing an epoxy group have the advantage that they do not react immediately with the isocyanate during the capsule synthesis. Most preferably poly[dimethylsiloxane-co-(2-(3,4-epoxycyclohexyl)ethyl)methylsiloxane] or poly(dimethylsiloxane), diglycidyl ether terminated are used together with a blocked isocyanate.

The reactive chemistry in the core may also be responsive to radiation, such as UV light. UV curable reactive chemistry contains one or more chemical reactants, such as a monomer, oligomer or polymer, which are curable by free radical polymerization or by cationic polymerization. In a preferred embodiment, the monomer, oligomer or polymer includes at least one acrylate group as polymerizable group.

In addition to the monomer, oligomer or polymer that are curable by free radical polymerization or by cationic polymerization in the core of the capsule, water soluble monomers and oligomers may also be included into the aqueous medium of the capsule dispersion.

The inkjet ink preferably includes at least one photoinitiator. Although water soluble or water dispersible photoinitiators may be used in the aqueous medium, preferably the at least one photoinitiator is present in the core of the capsule. Preferably also at least one co-initiator is present in the aqueous medium of the capsule dispersion. Similarly, the at least one co-initiator may be present in the aqueous medium, but is preferably present in the core of the capsule

Any polymerisable compound commonly known in the art may be employed. A combination of monomers, oligomers and/or polymers may be used. The monomers, oligomers and/or polymers may possess different degrees of functionality, and a mixture including combinations of mono-, di-, tri- and higher functionality monomers, oligomers and/or polymers may be used. Particularly preferred curable compounds to be incorporated in the core are disclosed in WO2015/158649 [0072-010].

### A.1.2.4. Solvent

The capsules according to the invention are dispersed into an aqueous medium. The aqueous medium comprises water, but may preferably include one or more water-soluble organic solvents.

The one or more organic solvents may be added for a variety of reasons. For example, it can be advantageous to add a small amount of an organic solvent to improve the dissolution of a compound in the first aqueous ink to be prepared. Preferable water-soluble organic solvents are polyols (e.g., ethylene glycol, glycerin, 2-ethyl-2-(hydroxymethyl)-1 ,3-propanediol, tetraethylene glycol, triethylene glycol, tripropylene glycol, 1,2,4-butanetriol, diethylene glycol, propylene glycol, dipropylene glycol, butyleneglycol, 1 ,6-hexanediol, 1 ,2-hexanediol, 1 ,5-pentanediol, 1,2-pentanediol, 2,2-dimethyl-1 ,3-prapanediol, 2-methyl-2,4-pentanediol, 3-methyl-1 ,5-pentanediol, 3-methyl-1 ,3-butanediol, and 2-methyl-1 ,3-propanediol), amines (e.g., ethanolamine, and 2-(dimethylamino)ethanol), monohydric alcohols (e.g., methanol, ethanol, and butanol), alkyl ethers of polyhydric alcohols (e.g., diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, and dipropylene glycol monomethyl ether), 2,2'thiodiethanol, amides (e.g., N,N-dimethylformamide), heterocycles (e.g., 2-pyrrolidone and N-methyl-2-pyrrolidone), and acetonitrile.

### A.1.3. Solvent

The aqueous medium of the first aqueous ink contains water, but may preferably include one or more water-soluble organic solvents. Suitable solvents are described in § A.1.2.4.

### A.1.4. Resin

The first aqueous ink according to the invention may comprise a resin suspension. The resin is often added to the ink jet ink formulation to achieve a good adhesion of the pigment to the fibres of the textile fabric. The resin is a polymer and suitable resins can be acrylic based resins, a urethane-modified polyester resin or a polyethylene wax, more preferably urethane-modified polyester resin.

### A.1.5. Additives

The first aqueous ink may further comprise a surfactant, a humectant and a thickener as an additive.

Humectants are preferably incorporated in the ink if this liquid is to be applied by means of a jetting technique such as inkjet or valve jet. Humectants prevent the clogging of nozzles. The prevention is due to its ability to slow down the evaporation rate of the first aqueous ink, especially the water in the ink. The humectant is preferably an organic solvent having a higher boiling point than water. Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is glycerol.

The humectant is preferably added to the liquid formulation in an amount of 0.1 to 20 wt.% based on the total weight of the liquid.

The first aqueous ink may contain a surfactant. Any known surfactant may be used but preferably a glycol surfactant and/or an acetylene alcohol surfactant. The use of the acetylene glycol surfactant and/or the acetylene alcohol surfactant further reduces bleeding to improve printing quality, and also improves the drying property in printing to allow high-speed printing.

The acetylene glycol surfactant and/or the acetylene alcohol surfactant is preferably one or more selected from 2, 4, 7, 9-tetramethyl-5-decine-4, 7-diol, alkylene oxide adducts of 2,4,7,9-tetramethyl-5-decine-4, 7-diol, 2,4-dimethyl-5-decin-4-ol, and alkylene oxide adducts of 2,4-dimethyl-5-decin-4-ol. These are available, for example, from Air Products (GB) as Olfine (registered trademark) 104 series and E series, such as Olfine E1 010, or from Nissin Chemical Industry as Surfynol (registered trademark) 465 and Surfynol 61.

The first aqueous ink may contain at least one pH adjuster. Suitable pH adjusters include organic amines, NaOH, KOH, NEt₃, NH₃, HCl, HNO₃ and H₂SO₄. In a preferred embodiment, the first aqueous ink has a pH lower than 7. A pH of 7 or less can advantageously influence the electrostatic stabilization of the capsules, especially when the dispersing groups of the nanocaps are amines.

The first aqueous ink may also contain an optothermal converting agent, which may be any suitable compound absorbing in the wavelength range of emission by an infrared light source. The optothermal converting agent is preferably an infrared dye as this allows easy handling into the inkjet ink. The infrared dye may be included into the aqueous medium, but is preferably included in the core of the capsule. In the latter, the heat transfer is usually much more effective.

Suitable examples of infrared dyes are disclosed in [0179] of WO2015158649. The one or more optothermal converting agents are preferably present in the range of 0.1 to 10 wt.% based on the total weight of the first aqueous ink.

### A.2. Second aqueous ink

The second aqueous ink of the set of the invention comprises water, a colorant stabilised by anionic dispersing groups and capsules stabilised by anionic dispersing groups and having a core comprising chemical reactant capable of forming a reaction product upon application of heat and/or radiation and a polymeric shell surrounding the core. Preferably the polymeric shell comprises anionic dispersing groups covalently bonded to the polymeric shell. More preferably the chemical reactant is a thermally reactive cross-linker, most preferably, the polymeric shell comprises anionic dispersing groups covalently bonded to the polymeric shell.

### A.2.1. Colorant stabilized by anionic dispersing groups

The colorant in the second aqueous ink may be a pigment or a disperse dye. Preferably pigments are included in the ink. Pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH, 2004. ISBN 3527305769.Suitable pigments are disclosed in paragraphs [0128] to [0138] of WO 2008/074548.

In a preferred embodiment of the invention, the colorant included in the first aqueous ink is the same as in the second aqueous ink, more preferably, the colorant is a pigment.

The pigment particles are dispersed in an aqueous medium using a polymeric dispersant, an anionic surfactant, but preferably a self-dispersible pigment is used. The latter prevents interaction of the polymeric dispersant with the dispersing groups of capsules which may be included in the aqueous ink (see below), since dispersion stability of the pigment is accomplished by the same technique of electrostatic stabilization as employed for the capsules.

A self-dispersible pigment is a pigment having on its surface covalently bonded anionic hydrophilic groups, such as salt-forming groups or the same groups used as dispersing groups for the capsules, that allow the pigment to be dispersed in an aqueous medium without using a surfactant or a resin.

The technology for making self-dispersible pigments is well-known. For example, EP1220879A discloses pigments having attached a) at least one steric group and b) at least one organic ionic group and at least one amphiphilic counterion, wherein the amphiphilic counterion has a charge opposite to that of the organic ionic group that are suitable for inkjet inks.

Also EP906371A discloses suitable surface-modified coloured pigment having attached hydrophilic organic groups containing one or more ionic groups or ionizable groups. Suitable commercially available self-dispersible colour pigments are, for example, the CAB-O-JET^{™} inkjet colorants from CABOT.

Pigment particles in the second aqueous ink, if to be used in an ink jetting recording method, should be sufficiently small to permit free flow of the ink through the inkjet-printing device, especially at the ejecting nozzles. It is also desirable to use small particles for maximum colour strength and to slow down sedimentation.

The average pigment particle size is then preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer BI90plus based upon the principle of dynamic light scattering. The ink is diluted with demi water to a pigment concentration of 0.002 wt%. The measurement settings of the BI90plus are: 5 runs at 23°C, angle of 90°, wavelength of 635 nm and graphics = correction function.

However, for white pigment inkjet inks, the numeric average particle diameter of the white pigment is the same as described in § A.1.1.

Suitable white pigments are given by Table 2 in [0116] of WO 2008/074548. The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548.

Also special colorants may be used, such as fluorescent pigments for special effects in clothing, and metallic pigments for printing a luxury look of silver and gold colours on textiles.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
statistically polymerized monomers (e.g. monomers A and B polymerized into ABBAABAB);
alternating polymerized monomers (e.g. monomers A and B polymerized into ABABABAB);
gradient (tapered) polymerized monomers (e.g. monomers A and B polymerized into AAABAABBABBB);
block copolymers (e.g. monomers A and B polymerized into AAAAABBBBBB) wherein the block length of each of the blocks (2, 3, 4, 5 or even more) is important for the dispersion capability of the polymeric dispersant;
graft copolymers (graft copolymers consist of a polymeric backbone with polymeric side chains attached to the backbone); and
mixed forms of these polymers, e.g. blocky gradient copolymers.

Suitable dispersants are DISPERBYK^{™} dispersants available from BYK CHEMIE, JONCRYL^{™} dispersants available from JOHNSON POLYMERS and SOLSPERSE^{™} dispersants available from ZENECA. A detailed list of non-polymeric as well as some polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The pigments are preferably present in the range of 0.01 to 15 %, more preferably in the range of 0.05 to 10 % by weight and most preferably in the range of 0.1 to 5 % by weight, each based on the total weight of the inkjet ink. For white inkjet inks, the white pigment is preferably present in an amount of 3% to 40% by weight of the inkjet ink, and more preferably 5% to 35%. An amount of less than 3% by weight cannot achieve sufficient covering power.

### A.2.2.Nanocapsules stabilized by anionic dispersing groups

### A.2.2.1. Method of preparation

The method of preparation of the capsules in the second aqueous ink are the same as in § A.1.2.1.

### A.2.2.2. Polymeric shell

Typical polymeric shells of the capsules included in the second aqueous ink of the set according to the invention and formed by interfacial polymerisation are selected from the group consisting of polyamides, typically prepared from di- or poly-acid chlorides as first shell component and di- or oligoamines as second shell component, polyurea, typically prepared from di- or oligoisocyanates as first shell component and di- or oligoamines as second shell component, polyurethanes, typically prepared from di- or oligoisocyanates as first shell component and di- or oligoalcohols as second shell component, polysulfonamides, typically prepared from di- or oligosulfochlorides as first shell component and di- or oligoamines as second shell component, polyesters, typically prepared from di- or oligo-acid chlorides as first shell component and di- or oligoalcohols as second shell component and polycarbonates, typically prepared from di- or oligo-chloroformates as first shell component and di- or oligoalcohols as second shell component. The shell can be composed of combinations of these polymers.

In a further embodiment, polymers, such as gelatine, chitosan, albumin and polyethylene imine can be used as second shell components in combination with a di- or oligio-isocyanate, a di- or oligo acid chloride, a di- or oligo-chloroformate and an epoxy resin as first shell component.

In a particularly preferred embodiment, the shell is composed of a polyurethane, a polyurea or a combination thereof. In a further preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent.

In a most preferred embodiment, the capsules are self-dispersing capsules. In order to make capsules self-dispersing, anionic dispersing groups, such as carboxylic acids or salts thereof, may be coupled covalently to the polymeric shell of the capsule to guarantee the dispersion stability.

A preferred strategy to incorporate anionic stabilizing groups into the polymeric shell of a nanocapsule makes use of carboxylic acid functionalized reactive surfactants that are capable of reacting with isocyanates. This leads to an amphoteric type of surfactant containing at least partially secondary or primary amines. Other reactive surfactants functionalized with a sulfonic acid or salt thereof, a phosphoric acid ester or a salt thereof or a phosphonic acid or salt thereof can be used.

Several amphoteric surfactants, being mixtures of surfactants partially having secondary amines but also comprising tertiary amines are commercially available. Prohibitive foam formation in ink jet inks based on nanocapsules made by using the commercially available amphoteric surfactants was encountered in an inkjet printer. Foaming caused problems in the ink supply and also in the degassing for trying to remove air from the ink, thus leading to unreliable jetting. Therefore, surfactants according to Formula (I) of WO2016/165970 are preferably used during the encapsulation process of the chemical reactants capable of forming reactants upon application of heat and/or light, preferably a thermal cross linker, more preferably a blocked isocyanate.

The capsules of the invention have an average particle size of no more than 4 µm as determined by dynamic laser diffraction. The nozzle diameter of inkjet print heads is usually 20 to 35 µm. Reliable inkjet printing is possible if the average particle size of the capsules is five times smaller than the nozzle diameter. An average particle size of no more than 4 µm allows jetting by print heads having the smallest nozzle diameter of 20 µm. In a more preferred embodiment, the average particle size of the capsules is ten times smaller than the nozzle diameter. Hence preferably, the average particle size is from 0.05 to 2 µm, more preferably from 0.10 to 1 µm. When the average particle size of the capsule is smaller than 2 µm, excellent resolution and dispersion stability with time are obtained.

In a further embodiment, the aqueous medium of the dispersion of the present invention may further comprise a catalyst to activate said thermally reactive chemistry. The catalyst is preferably selected from the group consisting of a Brönsted acid, a Lewis acid and thermal acid generator. Said catalyst can be present in the aqueous continuous phase, in the core of the capsule or in a separate dispersed phase.

### A.2.2.3. Core of the capsule

The core of the capsule included in the second aqueous ink is the same as described in § A.1.2.3.

### A.2.2.4. Solvent

The capsules according to the invention are dispersed into an aqueous medium. The aqueous medium comprises water, but may preferably include one or more water-soluble organic solvents.

The one or more organic solvents may be added for a variety of reasons and may be the same organic solvents as described in §1.2.4.

### A.2.2.5. Resin

The ink jet ink composition according to the invention may comprise a resin suspension. The resin is often added to the ink jet ink formulation to achieve a good adhesion of the pigment to the fibres of the textile fabric. The resin is a polymer and suitable resins can be acrylic based resins, a urethane-modified polyester resin or a polyethylene wax.

### B. Ink jet recording method

In an ink jet recording method including the application of the ink set of the invention, the textile fabric used is made of one type of fibre or blended fibre of two or more selected from the group consisting of cotton, hemp, rayon fibre, acetate fibre, silk, nylon fibre, and polyester fibre. In this embodiment, among the above-mentioned fabric, in particular, cotton, hemp, rayon fibre, and acetate fibre are low in bleeding of ink, and excellent in fixing property and are therefore preferred, and cotton is most preferred. The fabric may be in any form, for example, a woven, knitted, or nonwoven form of the above-mentioned fibres. The fibres of the fabric may be pre-treated, but this is not mandatory.

In a first step of the digital textile printing method, the first aqueous ink of the set is preferably applied to fabric using an ink jet head. By means of an ink jet head, it is possible to apply first aqueous ink onto areas of the fabric where the image should be printed. Suitable ink jet head types for applying the first aqueous ink are piezoelectric type, continuous type, thermal print head type or valve jet type.

Fabric to which the first aqueous ink has been applied may be dried and optionally undergo a heat treatment, before the subsequent ink jetting step with the second aqueous ink. The heat treatment is preferably at 110 to 200°C, more preferably 130 to 160°C. Heating at 110°C or higher enables the thermally reactive cross-linker in the core of the capsule in the first aqueous ink to be fixed to the fibres of the fabric. Examples of the heating process include, but are not limited to, heat press, atmospheric steaming, high-pressure steaming, and THERMOFIX. Any heat source can be used for the heating process; for example, an infrared ray lamp is employed. Preferably, no drying is performed between the application of the first aqueous ink and the second aqueous ink.

The second aqueous ink comprising a colorant, preferably a pigment, stabilized by anionic dispersing groups may be jetted by one or more ink jet heads ejecting small droplets in a controlled manner through nozzles onto the fabric on which a first aqueous ink has been applied and which is moving relative to the print head(s).

A preferred ink jet head for the inkjet printing system is a piezoelectric ink jet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the ink jet head head. However, the jetting of the ink according to the present invention is not restricted to piezoelectric inkjet printing. Other inkjet print heads can be used and include various types, such as a continuous type, a thermal print head type and a valve jet type.

After the application of the ink set, the printed fabric is dried and heated. If the heating step after the first aqueous ink did not occur (see above), the heating step of the printed fabric is required to activate the thermal crosslinker in the cores of the capsules. The drying step can be performed at the air, but the heating step must be performed by using heat sources; examples include equipment for forced-air heating, radiation heating such as IR-radiation, including NIR- and CIR radiation, conduction heating, high-frequency drying, and microwave drying. The drying step of the fabric is carried at a temperature preferably below 150°C, more preferably below 100°C, most preferably below 80°C. The heating step is preferably at 110 to 200°C, more preferably 130 to 160°C.

If an optothermal converting agent is present in the nanocapsules of the first and/or second aqueous inks, the heating mains may be a suitable light source. If the optothermal convering agent consists of one or more infrared dyes, an infrared light source is used. Any infrared light source may be used, as long as at least part of the emitted light is suitable for activating the thermally reactive crosslinker. The infrared curing means may include an infrared laser, an infrared laser diode, infrared LEDs or a combination thereof.

### EXAMPLES

### 1. Materials

- **Cab-o-Jet 465M** is a magenta pigment dispersion supplied by Cabot
- **Cab-o-Jet 465C** is a cyan pigment dispersion supplied by Cabot.
- **Cab-o-jet 300** is a carbon black pigment dispersion supplied by Cabot.
- **Special black 550** is a carbon black pigment supplied by Orion Engineered Carbons
- 3-acrylamidopropyl)trimethylammonium chloride supplied as 75 wt.% solution in water
- **Desmodur N75 BA** is a trifunctional isocyanate supplied by Bayer AG.
- **Trixene BI7963** is a malonate blocked isocyanate supplied by Baxenden Chemiclas LTD).
- **Lakeland ACP70** is a zwitterionic surfactant supplied by Lakeland Laboratories LTD.
- **CATSURF-1,** cationic surfactant synthesized as follows: 29 g (0.105 mol) (3-acrylamidopropyl)trimethylammonium chloride (supplied as 75 wt.% in water) was dissolved in 150 g isopropanol. 26.9 g (0.1 mol) octadecyl amine and 15 g (0.148 mol) triethyl amine were added and the mixture was heated to 80°C for 24 hours. The solvent was removed under reduced pressure
- **CATSURF-2,** cationic surfactant synthesized as follows: 58 g (0.21 mol) (3-acrylamidopropyl)trimethylammonium chloride (supplied as 75 W% in water) was dissolved in 150 g isopropanol. A mixture of 27 g (0.1 mol) octadecyl amine, 24.1 g (0.1 mol) hexadecyl amine and 30 g (0.148 mol) triethyl amine were added and the mixture was heated to 80°C for 24 hours. The solvent was removed under reduced pressure.
- **CATPOL-1, cationic dispersant synthesized as follows:** 76.3 g (0.5 mol) 4-chloromethyl-styrene and 55.5 g (0.55 mol) triethyl amine were dissolved in 375g acetonitrile. The mixture was refluxed for 6 hours. The reaction was monitored using TLC (Reveleris RP C18 TLC plates, supplied by Grace, eluent MeOH/water 60/40, R_{f} : 0.38). After 6 hours, the conversion was completed. The 27.6 w% solution of triethyl-[(4-vinylphenyl)methyl]ammonium chloride in acetonitrile was used directly in the synthesis of CATPOL-1. To 36.2 g of the above prepared solution, a solution of 9.8 g (94 mmol) styrene and 0.2 g (0.85 mmol) (1,1-dimethyl-3-phenyl-but-3-enyl)benzene and 0.6 g WAKO V601 in 14 g acetonitrile was added. The mixture was flushed with nitrogen and heated to 80°C for 24 hours. The conversion of triethyl-[(4-vinylphenyl)methyl]ammonium chloride was 90% based on TLC analysis. An additional 0.6 g WAKO V601 was added and the mixture was heated for an additional 24 hours at 80°C. Based on TLC analysis, the conversion was almost complete. The reaction mixture was allowed to cool down to room temperature and added to 400 ml methyl t.butyl ether. The mixture was stirred for 1 hour. CATPOL-1 was isolated by filtration and dried. 19.5 g of CATPOL-1 was isolated.

### 2. Measuring methods

### 2.1. L-values

L-values, as a measure for colour density, are obtained by printing a solid area on a texile fabric, using a DimatixTM DMP2831 system, equipped with a standard DimatixTM 10 pl print head. The ink was jetted at 22°C, using a firing frequency of 5 kHz, a firing voltage of 25 V and a standard waveform. For black inks, the lower the L-value, the higher the obtained colour density.

The L-values of the printed solid areas were measured using a Gretag SPM50 (Gretag Limited, Switserland).

### 2.2. Dry crock fastness

After printing and drying of the solid areas on the fabric, the dry crock fastness test is done according to ISO105-X12 with a Crockmeter SDL ATLAS M238AA. The coloration of the white rubbing cloth was given as Δ E according to the Cielab color space. The lower the ΔE values, the better the crock fastness.

### 2.3. Particle size measurement

The average particle size of the nanocapsules was measured using a ZetasizerTM Nano-S (Malvern Instruments, Goffin Meyvis).

### 3. First aqueous ink

### 3.1. preparation of the capsule dispersion CAPCAT-1

A solution of 22 g Desmodur N75 BA and 23 g Trixene BI7963 in 36 g ethyl acetate was prepared. A solution of 5.8 g CATSURF-2 and 30 g glycerol in 55 g water was prepared by heating the mixture to 90°C. The aqueous solution was allowed to cool down to room temperature. The ethyl acetate solution was added to the aqueous solution while stirring for 5 minutes using an Ultra-Turrax at a rotation speed of 18000 rpm. 50 g ice was added followed by the dropwise addition of a solution of 1.5 g tetraethylene pentamine in 40 g water at 0°C. The mixture was stirred for an additional five minutes. The ethyl acetate was evaporated at 60°C under reduced pressure, while gradually increasing the vacuum from 500 mbar to 120 mbar. The weight of the dispersion was adjusted to 150 g by evaporating water at 120 mbar. The dispersion was stirred for 16 hours at 65°C. The dispersion was allowed to cool down to room temperature and the dispersion was filtered over a 1.6 µm filter.

The average particle size was 165 nm.

### 3.2. Preparation of the colorant dispersion, stabilized with cationic groups CATDISP-1.

A mixture of 3 g Special black 550, 16 g water, 1 g CATPOL-1 and 100 g Yttrium stabilized zirconium oxide beads (0.4 mm) was milled for 5 days. The Yttrium stabilized zirconium oxide beads were removed by filtration and the cationic black dispersion CATDISP-1 was used for the formulation of the cationic ink CATINK-1.

The average particle size was 135 nm.

### 3.3. Preparation of the first aqueous ink CATINK-1

The CATINK-1 was prepared by mixing the components according to Table 2. All weight percentages are based on the total weight of the ink jet ink.

**Table 2**

| **Component** | **Wt.%** |
|---|---|
| CATDISP-1 | 25 |
| CAPCAT-1 | 40 |
| 1,2-propane diol | 17.5 |
| glycerol | 10 |
| water | 7.5 |

The ink was stirred for 5 minutes and filtered over a 1.6 µm filter.

### 3.4. Preparation of nanaocapsule dispersion CAPCAT-2

A solution of 22 g Desmodur N75 BA and 23 g Trixene BI7963 in 36 g ethyl acetate was prepared. A solution of 6.5 g CATSURF-2 and 30 g glycerol in 55 g water was prepared by heating the mixture to 90°C. The aqueous solution was allowed to cool down to room temperature. The ethyl acetate solution was added to the aqueous solution while stirring for 5 minutes using an Ultra-Turrax at a rotation speed of 18000 rpm. An additional 80 g water was added. The ethyl acetate was evaporated at 65°C under reduced pressure, while gradually increasing the vacuum from 500 mbar to 120 mbar. The weight of the dispersion was adjusted to 145 g by evaporating water at 120 mbar. The dispersion was stirred for 16 hours at 65°C. The dispersion was allowed to cool down to room temperature and the dispersion was filtered over a 1.6 µm filter.

The average particle size was 192 nm.

### 3.5. Preparation of a first aqueous ink CATINK-2

The CATINK-2 was prepared by mixing the components according to Table 3. All weight percentages are based on the total weight of the ink jet ink.

**Table 3**

| **Component** | **Wt.%** |
|---|---|
| CATDISP-1 | 24 |
| CAPCAT-2 | 38 |
| 1,2-propane diol | 16.5 |
| glycerol | 16.5 |
| water | 5 |

### 4. Second aqueous ink

### 4.1. Preparation of the nanocapsule dispersion ANIONCAP-1

A solution of 91 g Desmodur N75 BA, 95.2 g Trixene BI7963 and 8 g Lakeland ACP70 in 151 g ethyl acetate was prepared. This solution was added to a solution of 23.1 g Lakeland ACP70, 8.3 g L-lysine and 10.3 g triethanol amine in 310 g water while stirring for 10 minutes using an Ultra-Turrax at a rotation speed of 18000 rpm. An additional 350 g water was added. The ethyl acetate was evaporated at 65°C under reduced pressure, while gradually increasing the vacuum from 500 mbar to 120 mbar. Upon complete evaporation of the ethyl acetate, an additional 250 ml water was evaporated. Water was added to the dispersion to bring it to a total weight of 600 g. The dispersion was stirred for 16 hours at 65°C. The dispersion was allowed to cool down to room temperature. The dispersion was filtered over a 1 µm filter.

The average particle size was 180 nm.

### 4.2. Preparation of the second aqueous ink ANIONINK-1

The ANIONINK-1 was prepared by mixing the components according to Table 4. All weight percentages are based on the total weight of the ink jet ink.

**Table 4**

| **Component** | **Wt.%** |
|---|---|
| ANIONCAP-1 | 32 |
| Cab-o-jet 465M | 1 |
| Cab-o-jet 450C | 2 |
| Cab-o-jet 300 | 37 |
| N-methyl-diethanolamine | 0.8 |
| 1,2-propane diol | 13.6 |
| glycerol | 13.6 |

### 4.3. Preparation of the second aqueous ink ANIONINK-2

The ANIONINK-2 was prepared by mixing the components according to Table 5. All weight percentages are based on the total weight of the ink jet ink.

**Table 5**

| **Component** | **Wt.%** |
|---|---|
| ANIONCAP-1 | 38.5 |
| Cab-o-jet 465M | 1.2 |
| Cab-o-jet 450C | 2.4 |
| Cab-o-jet 300 | 20.5 |
| N-methyl-diethanolamine | 1 |
| 1,2-propane diol | 18.2 |
| glycerol | 18.2 |

The ink was stirred for 5 minutes and filtered over a 1.6 µm filter.

### 5. Preparation of a jettable primer CATPRIMER-1

An aqueous primer CATPRIMER-1 was prepared by mixing the components according to Table 6. All weight percentages are based on the total weight of the ink jet ink.

**Table 6:**

| **Component** | **Wt.%** |
|---|---|
| CAPCAT-2 | 38 |
| 1,2-propane diol | 22 |
| Glycerol | 15 |
| Water | 25 |

The jettable primer was stirred for 5 minutes and filtered over a 1.6 µm filter.

### 6. Example 1

This example illustrates the increase in colour density, e.g. black density, when printing a second aqueous ink (=black anionic ink) on top of a first aqueous ink (black cationic ink) from the ink set according to the invention, compared to twice printing the second aqueous ink whilst the crock performance is maintained.

### Inventive sample INV-1:

A solid area of the first aqueous ink CATINK-2 was printed on an untreated cotton textile as described in § 2.1 of the Examples section. The printed solid area was directly overprinted with the second aqueous ink ANIONINK-2 as described in § 2.1 of the Examples section. The sample INV-1 was subsequently dried followed by thermal fixation at 160°C for 5 minutes in an oven.

### Comparative sample COMP-1:

A solid area of the second aqueous ink ANIONINK-2 was printed on an untreated cotton textile as described in § 2.1 of the Examples section. The printed solid area was directly overprinted with the second aqueous ink ANIONINK-2 as described in § 2.1 of the Examples section. The sample COMP-1 was subsequently dried followed by thermal fixation at 160°C for 5 minutes in an oven.

The measured L-values and the crock fastness values of the solid areas are summarized in Table 7.

**Table 7**

| Sample | L-value | Dry crock |
|---|---|---|
| INV-1 | 25.7 | 4.35 |
| COMP-1 | 29.95 | 4.25 |

From Table 7, it can be concluded that images printed on an untreated textile fabric with the inks from the ink set according to the invention, show higher colour density values than images printed with only one ink of the ink set for a comparable dry crock fastness.

### 7. Example 2

This examples illustrates the increase in black density when printing a second aqueous ink (=black anionic ink) on top of a first aqueous ink (black cationic ink) from the ink set according to the invention, compared to printing an ink comprising a doubled black pigment concentration on a cationic primer, while maintaining the overall pigment and capsule coverage the same. The inventive combination also shows an improvement in crock resistance.

### Inventive sample INV-2:

A solid area of the first aqueous ink (=cationic ink CATINK-2) was printed on an untreated cotton textile as described in § 2.1 of the Examples section. The printed solid area was directly overprinted with the second aqueous in (=anionic ink ANIONINK-2) as described in § 2.1 of the Examples section. The sample INV-2 was dried followed by thermal fixation at 160°C for 5 minutes.

### Comparative sample COMP-2:

A solid area of the cationic primer CATPRIMER-1 was printed on an untreated cotton textile as described in § 2.1 of the Examples section. The printed solid area was directly overprinted with the anionic ink ANIONINK-1 as described in § 2.1 of the Examples section. The sample COMP-1 was dried followed by thermal fixation at 160°C for 5 minutes.

The measured L-values and the crock fastness values of the solid areas are summarized in Table 8.

**Table 8**

| Sample | L-value | Dry Crock |
|---|---|---|
| INV-2 | 25.7 | 4.35 |
| COMP-2 | 28.1 | 8.55 |

From Table 8, it can be concluded that images printed on an untreated textile fabric with the inks form the ink set according to the invention, show higher colour density values and higher crock fastness than images printed with only one ink from the ink set together on top of a cationic pre-treatment.

## Claims

1. An ink set for inkjet recording, comprising a first aqueous ink and a second aqueous ink, the first aqueous ink comprising a first colorant stabilized by a dispersant comprising a cationic group, the dispersant being a polymer or a surfactant, or a self-dispersable pigment having attached at least one organic group, the organic group comprises a cationic group and a first capsule composed of a polymeric shell surrounding a core, the first capsule is stabilized by cationic dispersing groups; the second aqueous ink comprises a second colorant stabilized by anionic dispersing groups and a second capsule composed of a polymeric shell surrounding a core, the second capsule is stabilized by anionic dispersing groups and wherein the core of the first and second capsule independently comprise one or more chemical reactants capable of forming a reaction product upon application of heat and/or light.

2. The ink set according to claim 1 wherein the one or more chemical reactants is a thermally reactive cross-linker.

3. The ink set according to claim 2 wherein the thermally reactive cross-linker is a blocked isocyanate.

4. The ink set according to any of the preceding claims wherein the polymeric shell of the capsules included in the first aqueous ink comprises a cationic dispersing group covalently bonded to the polymeric shell.

5. The ink set according to any of the preceding claims wherein the polymeric shell of the capsules included in the second aqueous ink comprises an anionic dispersing group covalently bonded to the polymeric shell.

6. The ink set according to claim 4, wherein the polymeric shell of the capsule in the first aqueous ink comprises cationic dispersing groups obtainable by reacting a surfactant comprising at least one primary or secondary amine and quaternary ammonium group with a compound selected from the group of di- or poly-acid chlorides, di- or oligoisocyanates, di- or oligosulfochlorides, di- or oligo-chloroformates and an isocyanate monomer.

7. The ink set according to any of the preceding claims, wherein the colorant is a pigment.

8. The ink set according to any of the preceding claims, wherein the pigment is a black pigment.

9. The ink set according to claim 6, wherein the surfactant has a structure according to formula I 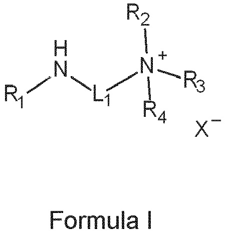 wherein
R₁ is selected from the group consisting of a substituted or unsubstituted alkyl group, a substituted or unsubstituted alkenyl group and a substituted or unsubstituted alkynyl group with the proviso that R₁ comprises at least eight carbon atoms;
R₂, R₃ and R₄ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubsituted alkaryl group and a substituted or unsubstituted (hetero)aryl group;
L₁ represents a divalent linking group comprising no more than eight carbon atoms;
X represents a counterion to compensate the positive charge of the ammonium group.

10. The ink set according to any of the preceding claims, wherein the colorant in the first aqueous ink is stabilized by a copolymer comprising at least one styrene monomer and at least one monomer comprising an aliphatic ammonium group.

11. The ink set according to any of the preceding claims, wherein the copolymer is poly(styrene-co-trialkyl-[(4-vinylphenyl)methyl]ammonium halogenide).

12. An inkjet recording method comprising the steps of:
a) applying the first aqueous ink of the ink set as defined in one of the claims 2 to 11 onto a textile fabric; and
b) applying the second aqueous ink onto the applied first aqueous ink of the ink set as defined in one of the claims 2 to 11; and
c) applying heat to activate thermally reactive cross-linker as defined in one of the claims 2 to 11.

## Patentansprüche

1. Ein Tintensatz für Tintenstrahlaufzeichnung, umfassend eine erste wässrige Tinte und eine zweite wässrige Tinte, wobei die erste wässrige Tinte ein erstes Farbmittel, das durch ein eine kationische Gruppe umfassendes Dispersionsmittel stabilisiert ist, wobei das Dispersionsmittel ein Polymer oder Tensid ist, oder ein selbstdispergierbares Pigment umfasst, an das mindestens eine organische Gruppe gebunden ist, wobei die organische Gruppe eine kationische Gruppe und eine erste, aus einer polymeren, einen Kern umgebenden Hülle bestehende Kapsel umfasst, wobei die erste Kapsel durch kationische Dispersionsgruppen stabilisiert ist, wobei die zweite wässrige Tinte ein zweites, durch anionische Dispersionsgruppen stabilisiertes Farbmittel und eine zweite, aus einer polymeren, einen Kern umgebenden Hülle bestehende Kapsel umfasst, wobei die zweite Kapsel durch anionische Dispersionsgruppen stabilisiert ist und wobei der Kern der ersten und zweiten Kapsel unabhängig voneinander einen oder mehrere chemische Reaktanten, die in der Lage sind, bei Erwärmung und/oder Belichtung ein Reaktionsprodukt zu bilden, umfasst.

2. Der Tintensatz nach Anspruch 1, wobei die eine oder mehreren chemischen Reaktanten ein thermisch reaktives Vernetzungsmittel ist (sind).

3. Der Tintensatz nach Anspruch 2, wobei das thermisch reaktive Vernetzungsmittel ein blockiertes Isocyanat ist.

4. Der Tintensatz nach einem der vorstehenden Ansprüche, wobei die polymere Hülle der in der ersten wässrigen Tinte enthaltenen Kapseln eine kovalent an die polymere Hülle gebundene kationische Dispersionsgruppe umfasst.

5. Der Tintensatz nach einem der vorstehenden Ansprüche, wobei die polymere Hülle der in der zweiten wässrigen Tinte enthaltenen Kapseln eine kovalent an die polymere Hülle gebundene anionische Dispersionsgruppe umfasst.

6. Der Tintensatz nach Anspruch 4, wobei die polymere Hülle der Kapsel in der ersten wässrigen Tinte kationische Dispersionsgruppen enthält, die durch Reagierenlassen eines Tensids, das mindestens eine primäre oder sekundäre Aminogruppe und eine quaternäre Ammoniumgruppe umfasst, mit einer Verbindung, ausgewählt aus der Gruppe bestehend aus Di- oder Polysäurechloriden, Di- oder Oligoisocyanaten, Di- oder Oligosulfochloriden, Di- oder Oligochlorformiaten und einem Isocyanatmonomer, erhalten werden können.

7. Der Tintensatz nach einem der vorstehenden Ansprüche, wobei das Farbmittel ein Pigment ist.

8. Der Tintensatz nach einem der vorstehenden Ansprüche, wobei das Pigment ein schwarzes Pigment ist.

9. Der Tintensatz nach Anspruch 6, wobei das Tensid eine Struktur gemäß Formel I aufweist: 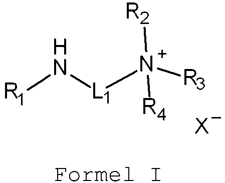 in der
R₁ aus der Gruppe bestehend aus einer substituierten oder nicht-substituierten Alkylgruppe, einer substituierten oder nicht-substituierten Alkenylgruppe und einer substituierten oder nicht-substituierten Alkynylgruppe ausgewählt wird, mit der Maßgabe, dass R₁ mindestens acht Kohlenstoffatome umfasst,
R₂, R₃ und R₄ unabhängig voneinander aus der Gruppe bestehend aus einer substituierten oder nicht-substituierten Alkylgruppe, einer substituierten oder nicht-substituierten Alkenylgruppe, einer substituierten oder nicht-substituierten Alkynylgruppe, einer substituierten oder nicht-substituierten Aralkylgruppe, einer substituierten oder nicht-substituierten Alkarylgruppe und einer substituierten oder nicht-substituierten (Hetero)arylgruppe ausgewählt werden,
L₁ eine nicht mehr als acht Kohlenstoffatome umfassende divalente Verbindungsgruppe bedeutet,
X ein Gegenion zum Ausgleich der positiven Ladung der Ammoniumgruppe bedeutet.

10. Der Tintensatz nach einem der vorstehenden Ansprüche, wobei das Farbmittel in der ersten wässrigen Tinte durch ein Copolymer, das mindestens ein Styrolmonomer und mindestens ein eine aliphatische Ammoniumgruppe umfassendes Monomer umfasst, stabilisiert ist.

11. Der Tintensatz nach einem der vorstehenden Ansprüche, wobei das Copolymer Poly(styrol-co-trialkyl-[(4-vinylphenyl)-methyl]-ammoniumhalogenid) ist.

12. Ein Tintenstrahlaufzeichnungsverfahren, umfassend die folgenden Schritte:
a) Auftrag der ersten wässrigen Tinte des wie in einem der Ansprüche 2 bis 11 definierten Tintensatzes auf ein Textilgewebe, und
b) Auftrag der zweiten wässrigen Tinte auf die aufgetragene erste wässrige Tinte des wie in einem der Ansprüche 2 bis 11 definierten Tintensatzes, und
c) Erwärmung, um das wie in einem der Ansprüche 2 bis 11 definierte thermisch reaktive Vernetzungsmittel zu aktivieren.

## Revendications

1. Ensemble d'encres pour l'enregistrement à jet d'encre comprenant une première encre aqueuse et une deuxième encre aqueuse, ladite première encre aqueuse comprenant une première matière colorante stabilisée par un dispersant comprenant un groupe cationique, ledit dispersant étant un polymère ou un agent tensioactif, ou un pigment auto-dispersible auquel est lié au moins un groupe organique, ledit groupe organique comprenant un groupe cationique et une première capsule composée d'une enveloppe polymère entourant un cœur, ladite première capsule étant stabilisée par des groupes dispersants cationiques, ladite deuxième encre aqueuse comprenant une deuxième matière colorante stabilisée par des groupes dispersants anioniques et une deuxième capsule composée d'une enveloppe polymère entourant un cœur, ladite deuxième capsule étant stabilisée par des groupes dispersants anioniques et **caractérisé en ce que** ledit cœur desdites première et deuxième capsules comprenant, indépendamment l'un de l'autre, un ou plusieurs réactants chimiques capables de former un produit de réaction lorsqu'il est exposé à de la chaleur et/ou à de la lumière.

2. Ensemble d'encres selon la revendication 1, **caractérisé en ce que** lesdits un ou plusieurs réactants chimiques est (sont) un réticulant thermoréactif.

3. Ensemble d'encres selon la revendication 2, **caractérisé en ce que** le réticulant thermoréactif est un isocyanate bloqué.

4. Ensemble d'encres selon l'une quelconque des revendications précédentes, **caractérisé en ce que** l'enveloppe polymère des capsules contenues dans ladite première encre aqueuse comprend un groupe dispersant cationique lié par covalence à l'enveloppe polymère.

5. Ensemble d'encres selon l'une quelconque des revendications précédentes, **caractérisé en ce que** l'enveloppe polymère des capsules contenues dans ladite deuxième encre aqueuse comprend un groupe dispersant anionique lié par covalence à l'enveloppe polymère.

6. Ensemble d'encres selon la revendication 4, **caractérisé en ce que** l'enveloppe polymère de la capsule dans la première encre aqueuse comprend des groupes dispersants cationiques pouvant être obtenus en faisant réagir un agent tensioactif comprenant au moins un groupe amine primaire ou secondaire et un group ammonium quaternaire avec un composé choisi parmi le groupe composé de chlorures de diacide ou de polyacide, de diisocyanates ou oligoisocyanates, de disulfochlorures ou oligosulfochlorures, de dichloroformiates ou oligochloroformiates et d'un monomère d'isocyanate.

7. Ensemble d'encres selon l'une quelconque des revendications précédentes, **caractérisé en ce que** la matière colorante est un pigment.

8. Ensemble d'encres selon l'une quelconque des revendications précédentes, **caractérisé en ce que** le pigment est un pigment noir.

9. Ensemble d'encres selon la revendication 6, **caractérisé en ce que** l'agent tensioactif a une structure répondant à la Formule I: 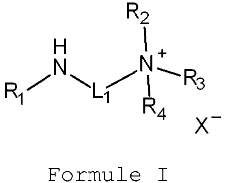 où
R₁ est choisi parmi le groupe composé d'un groupe alkyle substitué ou non substitué, d'un groupe alcényle substitué ou non substitué et d'un groupe alcynyle substitué ou non substitué, à condition que R₁ comprenne au moins huit atomes de carbone,
R₂, R₃ et R₄ sont choisis, indépendamment l'un de l'autre, parmi le groupe composé d'un groupe alkyle substitué ou non substitué, d'un groupe alcényle substitué ou non substitué, d'un groupe alcynyle substitué ou non substitué, d'un groupe aralkyle substitué ou non substitué, d'un groupe alcaryle substitué ou non substitué et d'un groupe (hétéro)aryle substitué ou non substitué,
L₁ représente un groupe de liaison divalent comprenant un maximum de huit atomes de carbone,
X représente un contre-ion compensant la charge positive du groupe ammonium.

10. Ensemble d'encres selon l'une quelconque des revendications précédentes, **caractérisé en ce que** la matière colorante dans la première encre aqueuse est stabilisée par un copolymère comprenant au moins un monomère de styrène et au moins un monomère comprenant un groupe ammonium aliphatique.

11. Ensemble d'encres selon l'une quelconque des revendications précédentes, **caractérisé en ce que** le copolymère est l'halogénure de poly(styrène-co-trialkyl-[(4-vinylphényl)-méthyl]-ammonium).

12. Procédé d'enregistrement à jet d'encre comprenant les étapes consistant à:
a) appliquer la première encre aqueuse de l'ensemble d'encres tel que défini dans l'une quelconque des revendications 2 à 11 sur un tissu de textile, et
b) appliquer la deuxième encre aqueuse sur la première encre aqueuse appliquée de l'ensemble d'encres tel que défini dans l'une quelconque des revendications 2 à 11, et
c) effectuer un chauffage afin d'activer le réticulant thermoréactif tel que défini dans l'une quelconque des revendications 2 à 11.
